# DEMANDE DE BREVET EUROPEEN

(11) **EP 2 815 791 A1**
(43) Date de publication de la demande: **24.12.2014**
(21) Numéro de dépôt: 14172974.9
(22) Date de dépôt: 18.06.2014
(51) Int. Cl.: A62B 35/04, B64C 31/028, B64D 17/30

(54) **Conteneur de maintien pour dispositif auto déployable d'amortissement de chocs**

(30) Priorité: 18.06.2013 FR 1355707
(71) Demandeur: Fradet, Eric, 06530 Le Tignet (FR)
(72) Inventeur: Fradet, Eric, 06530 Le Tignet (FR)
(74) Mandataire: Cabinet Chaillot

(57) **Abrégé**

L'invention porte sur un dispositif destiné à amortir les chocs à l'atterrissage pouvant équiper un harnais et/ou un utilisateur pour pratiquer le saut d'avion sans risque d'interférences. L'invention concerne en particulier un dispositif permettant durant la sortie d'avion et la chute libre, de contenir neutralisée dans un volume réduit, une poche souple gonflable (11) à l'air, pour la déployer pendant la descente sous voilure. Il est constitué d'un fond (3) de conteneur accroché au harnais et/ou à l'utilisateur, pouvant être rendu amovible par sangles d'attache et drisses, dans lequel est disposée une poche souple (11) de sorte que son trou d'entrée d'air (28) est obturé au moyen de panneaux verrouillés par un câble de libération. Lorsque l'utilisateur exerce une action sur la poignée d'ouverture, le câble sépare les panneaux permettant le délestage de la poche souple, et l'ouverture du trou (28), au flux d'air provenant du déplacement en avant, du harnais pendant la descente sous voilure.

## Description

La présente invention a pour objet un conteneur de maintien qui équipe un parachutiste, un harnais ou une palette de colis largué, et dont l'ouverture commande un dispositif auto-déployable d'amortissement de chocs, afin de diminuer à l'utilisateur ou au colis largué l'impact à l'atterrissage.

Le conteneur selon l'invention dispose d'une poche souple servant de coussin, gonflable par le flux d'air provenant du déplacement du harnais à parachute durant la descente sous voilure, pouvant amortir les chocs lors de l'atterrissage, ladite poche souple peut être réalisée sous la forme d'une poche de gonflage unique, munie d'un ou plusieurs trou(s) d'entrée d'air, ou encore être constituée de plusieurs poches de gonflage.

La poche souple se replie et se maintient dans une première position essentiellement « à plat » grâce à un moyen de contention obtenu par la fermeture du conteneur, vers une deuxième position en mode déplié lorsque ledit conteneur et le volet d'entrée d'air sont ouverts. Le but de l'invention est notamment la réalisation d'un conteneur qui permette de contenir un dispositif d'amortissement de chocs dans un volume réduit afin de pratiquer la sortie d'avion et la chute libre et qui lorsqu'il est activé durant le vol sous voilure ouverte, fonctionne tel que ceux connus en parapente.

L'objet de l'invention peut être inclus à la construction d'un harnais à parachute, ajouté de manière détachable aux harnais de sauts à parachute existants et/ou ajouté sur le corps de l'utilisateur ou sur une palette de colis largué.

Selon le mode de réalisation, la surface de protection peut être limitée pour un parachutiste depuis la région dorsale lombaire jusqu'à la région sous-cutale, ou étendue à une surface supérieure de protection des membres inférieurs de l'utilisateur ou à la surface de la palette dans le cas d'un colis largué. Le fond du conteneur tourné vers le dos de l'utilisateur constitue ainsi un panneau d'appui sous-cutal qui peut se prolonger en saillie sous les cuisses de l'utilisateur, tandis que le fond opposé à la face s'étendant en utilisation sur la région de protection sert à la disposition de la poche souple gonflable.

Lorsqu'il est positionné sur une palette de colis largué, le fond du conteneur est positionné sur le dos de la palette surélevée par deux rails afin que les panneaux du conteneur ne soient pas en frottement avec la soute de l'avion.

La poche souple gonflable peut par repli sur elle-même constituer le conteneur auquel cas la poche souple est rendue solidaire du conteneur en un seul et même ensemble par piqûre, d'autres techniques de fabrication garantissent le même résultat comme le collage ou la soudure haute fréquence, si la matière liant le conteneur et la poche souple est thermo-soudable.

Lorsque le conteneur est fixé de manière permanente au harnais d'un utilisateur, son fond est de préférence cousu sur la sangle dorsale lombaire et sur les sangles de rattachement aux sangles cuissardes, il possède alors des panneaux indépendants cousus à la périphérie du fond destinés à enfermer la poche souple amovible rapportée au fond du côté opposé, à celui où l'utilisateur s'appuie lors de l'utilisation.

Dans les cas où le conteneur et la poche souple sont un seul et même ensemble, le conteneur enfermant la poche souple peut se détacher soit de la palette de colis largué, soit du harnais et/ou de l'utilisateur, l'amovibilité est rendue possible par un jeu d'organes d'accrochage tels que boucles, pressions, agrafes, ruban agrippant, fermeture éclair, boutons ou autre organe similaire.

Plus particulièrement l'invention s'intéresse aux conteneurs constitués d'une manière générale par un fond comportant des moyens de fixation au harnais et/ou à l'utilisateur ou à une palette pour colis largué, et formant en combinaison de panneaux une enveloppe fermée constituant une poche souple gonflable par le passage du flux d'air lorsqu'est ouvert le trou d'entrée d'air situé en avant du sens de déplacement.

Le conteneur avant utilisation est comprimé et conformé sur lui-même pour servir de moyen de fermeture, de préférence plié, de sorte qu'au moins un panneau du conteneur forme un volet pour obturer le trou d'entrée d'air de sorte qu'il n'offre aucune gêne et pouvant accessoirement, être déployé à volonté durant la descente sous voilure.

Selon l'état de la technique, le volume au préalable gonflé de dispositifs connus tel que ceux destinés au parapente et décrits dans les demandes de brevets français FR2768698 ou FR2942204, interdit leur utilisation en chute libre pour cause d'encombrement majeur et d'augmentation des risques d'interférence à l'ouverture du parachute.

La solution propose de disposer d'une poche souple compressible enfermée dans un conteneur ou formant conteneur, destiné à équiper par rajout détachable, ou de manière permanente selon le mode de réalisation choisi, un parachutiste et/ou son harnais de saut, ou une palette de colis largué, puis d'être conformé en un état déplié d'utilisation moyennant une manoeuvre unique ou multiple réalisée pendant la descente sous voilure ouverte.

Ce résultat est obtenu après la libération de la poche souple par l'ouverture concomitante de volet(s) obturant(s) un ou plusieurs trou(s) d'entrée d'air disposé(s) sur la face de la poche souple dirigée en avant du sens de déplacement, le volet peut être constitué par un des panneaux, le trou d'entrée d'air est situé entre les mollets de l'utilisateur quand ce dernier utilise un parachute de type aile, et orienté vers la partie inférieure des jambes de l'utilisateur en position d'utilisation, ou situé de manière opposée au fond du conteneur et dirigé vers le sol quand il s'agit d'un conteneur destiné à un saut en parachute de type hémisphérique à déplacement essentiellement vertical.

Le passage de la configuration fermée à la configuration déployée se réalise après l'ouverture du parachute, sans aucune action autre que le déblocage manuel ou automatique de moyens permettant le blocage de la poche souple en position repliée et l'ouverture du trou d'entrée d'air, ou grâce à une combinaison de ces moyens ensemble.

L'objectif est atteint en ce sens que dans le mode préféré de réalisation, le déblocage d'un seul moyen permet de déplier la poche souple et de présenter l'ouverture de son trou d'entrée d'air, au flux d'air créé par le déplacement du parachute, permettant le passage du conteneur à un volume maximum.

Le conteneur objet de l'invention est muni d'un fond et de ses panneaux associés constituant une poche souple, aptes à se rabattre en mode fermeture par des moyens de verrouillage ou d'inter-verrouillage dont ils sont munis sur leurs bords.

Il est prévu d'utiliser des moyens d'assemblage et de contention des panneaux, en eux-mêmes connus par exemple l'un des panneaux portant des boucles coopérant avec des crochets portés par l'autre panneau pour les maintenir accrochés l'un à l'autre ou une pièce de liaison portant des boucles se fixant sur les deux panneaux portant des crochets, comme par exemple un modèle connu dans l'art du parachute de base jump qui consiste à un rabat de couverture central à ruban agrippant mâle maintenant assemblés des panneaux de fermeture du conteneur où a été disposé du ruban agrippant femelle.

Un autre moyen préférentiellement employé consiste en un système de boucles et d'oeillets complémentaires fermés par un organe de verrouillage tel un câble de libération les maintenant assemblés en position de fermeture.

Dans une variante simplifiée, les panneaux latéraux de la poche souple sont comprimés par une ceinture, et le trou d'entrée d'air séparément obturé, d'autres moyens de maintien et de mise en oeuvre de la poche souple devenant coussin gonflable peuvent être utilisés par l'homme de l'art.

L'action d'ouverture du conteneur de maintien associant la décompression et le gonflage du dispositif d'amortissement de chocs peut être effectuée par des moyens de commande à distance constitués par une poignée actionnant un câble de libération, ou commandant un volet d'obturation pour libérer le trou d'entrée d'air.

Pour rajouter de manière temporaire le conteneur, objet de l'invention à un colis largué équipé d'une palette avec un harnais ou à un parachutiste équipé d'un harnais, on dispose de demi-ceintures ou de sangles d'attache pourvues de boucles d'accrochage destinées à retenir et ajuster le haut du fond du conteneur soit à chaque coin du dos de la palette, soit à la taille de l'utilisateur ou au harnais, et de sangles réglables, dites drisses de maintien dédiées à passer sur et autour des cuisses.

Du fait de cet ajustement du haut du conteneur au harnais d'un parachutiste équipé d'un parachute de type « aile », on a remarqué que durant la descente sous voilure, l'aisance et le recul de l'utilisateur dans son harnais était diminuée, de sorte que l'on a prévu un moyen de résorber et de ménager du « mou » dans les sangles d'attaches du haut du conteneur grâce à un système de connexion et de déconnexion relié de préférence à la poignée de commande d'ouverture du conteneur. La résorption du « mou » des sangles d'attaches intervient avant l'utilisation en sortie d'avion et en chute libre, et la libération dudit « mou » intervient après l'ouverture du parachute concomitamment à l'ouverture du conteneur.

Dans le mode de réalisation préféré de l'invention, le dispositif se présente sur l'utilisateur comme un fond constituant avec deux panneaux de fermeture latérale disposés en vis-à-vis, un conteneur pliable de forme carrée, rectangulaire ou trapézoïdale, éventuellement échancré entre les jambes, pouvant être plié dans une position à plat suivant une, ou plusieurs lignes de pliage.

Le conteneur de maintien de l'invention pour saut en parachute de type «aile» comporte un dispositif d'amortissement de chocs constitué d'une poche souple faite de panneaux reliés le long d'arêtes, qui forment en position déployée des faces sensiblement parallèles entre elles, la forme du coussin gonflable est de préférence parallélépipédique, lorsque le dispositif est déployé il présente une face avant s'étendant depuis le bord avant du fond du conteneur et une face arrière s'étendant depuis le bord arrière du fond, le trou d'entrée d'air distingue une face de l'autre, et les faces latérales de la poche s'étendent depuis les bords latéraux du fond de conteneur.

Dans une variante de réalisation, le conteneur peut être formé de deux panneaux indépendants extérieurs à la poche souple constituant un moyen de fermeture latérale, auxquels il peut être ajouté un rabat inférieur de fermeture qui peut être réduit à l'état de mini-rabat(s) et comporter éventuellement des moyens de rétraction des panneaux indépendants.

Lorsque le conteneur selon l'invention est disposé sur le harnais d'un passager tandem, on a observé que le déploiement de la poche souple est entravé à cause de la gêne occasionnée par la proximité du corps du pilote tandem situé derrière et contre le dos du passager porteur du dispositif selon l'invention, et il faut donc que le pilote tandem l'y aide en venant écarter manuellement les bords des panneaux indépendants pour permettre à la poche souple de s'extraire par gravité.

La manipulation est de cette sorte plus longue et peut être difficile à opérer lorsqu'il s'agit de sauts effectués de nuit avec emport de gants épais, obligeant le pilote tandem à tâter le conteneur pour l'ouvrir plus largement.

Afin de favoriser la chute de la poche souple après le geste d'extraction du (des) câble (s) de libération du conteneur et ainsi permettre son déploiement aisé sans autre action manuelle, on dispose de drisse(s) de rappel reliée(s) à chaque extrémité inférieure libre du panneau indépendant du conteneur, chaque drisse de rappel est en charge de replier l'extrémité libre de chaque panneau indépendant sur lui-même en forme de coin vers l'extérieur du conteneur. L'autre extrémité de la drisse de rappel est reliée à la poignée de commande d'ouverture du conteneur de manière couplée au(x) câble(s) de libération.

L'auto-déploiement de la poche souple est obtenu, après avoir actionné manuellement la poignée d'ouverture qui commande successivement dans le même geste, le(s) câble(s) de libération des panneaux de fermeture qui maintien(t)nent la poche souple à rester repliée, et l'écartement des panneaux indépendants ce qui a pour effet de laisser de l'espace libre à la poche souple pour tomber par gravitation.

A ce stade de l'ouverture du conteneur, la présence du pilote tandem au contact du dos du passager équipé du conteneur selon l'invention, peut encore empêcher par friction, la chute et le déploiement de la poche souple.

Le déploiement et l'accélération du gonflage de la poche souple sont avantageusement réalisés par lest avec des compartiments comportant du poids, le lest peut par exemple être constitué de billes de plomb ou par du sable, disposés dans une poche cousue sur le rebord inférieur de la poche, en particulier sur le bord inférieur de l'entrée d'air en position d'utilisation.

Selon un mode de réalisation, un volet est disposé devant l'entrée d'air pour l'obturer pendant la chute libre, ledit volet étant actionnable par l'utilisateur pour dégager l'entrée d'air de la poche souple afin de déployer le coussin gonflable après l'ouverture du parachute.

Selon un mode de réalisation, le fond est cousu, collé ou soudé en moitié inférieure du harnais et aux sangles de rattachement des sangles cuissardes au harnais.

Généralement, le fond sera cousu, mais si la matière constituant la poche souple est thermosoudable, une fixation par soudage hautes fréquences est possible, de même qu'un collage.

Selon un mode de réalisation, le fond est soit fixé intégralement en partie inférieure du harnais, soit une partie du fond est fixée en moitié inférieure du harnais, la partie restante du fond du conteneur étant fixée à chacune des cuisses de l'utilisateur par des drisses de maintien se refermant autour de chacune des cuisses de l'utilisateur ou autour des sangles cuissardes.

Selon un autre mode de réalisation, le fond est fixé de manière amovible à une extrémité par des sangles d'attache se refermant par un premier moyen de verrouillage autour de la sangle dorsale lombaire du harnais de l'utilisateur, autour des sangles principales du harnais ou dans des anneaux de liaison hanche des sangles principales du harnais situés au niveau des hanches de l'utilisateur, et à l'autre extrémité aux sangles cuissardes ou à chacune des cuisses de l'utilisateur par des drisses de maintien se refermant autour.

Selon un mode de réalisation, une extrémité du fond est fixée de manière amovible autour de la sangle dorsale lombaire, autour des sangles principales ou dans des anneaux de liaison des sangles principales et l'autre extrémité du fond est fixée à chacune des cuisses de l'utilisateur par des drisses de maintien se refermant autour de chacune des cuisses de l'utilisateur ou autour des sangles cuissardes, caractérisé par le fait que lesdites sangles d'attache présentent un deuxième moyen de verrouillage déverrouillable par l'utilisateur, en retrait du premier moyen de verrouillage ou bien des sangles d'attache en matériau élastique.

Un avantage de cette configuration est que le dispositif est confortable une fois le conteneur ouvert, car l'utilisateur a plus de mou pour ses mouvements, tout en ayant un jeu de mouvement minimal avant l'ouverture du parachute, lorsque le conteneur est fermé.

Selon un mode de réalisation, le fond est fixé à une extrémité par deux demi-ceintures d'attache entourant la taille de l'utilisateur et à l'autre extrémité par des drisses de maintien se refermant autour de chacune des cuisses de l'utilisateur ou autour des sangles cuissardes.

Selon un autre mode de réalisation du conteneur, le fond qui équipe une palette pour colis largué est fixé par des drisses de maintien entourant chaque extrémité de la palette pour colis largué.

Selon un mode de réalisation, le coussin gonflable est fixé de manière amovible sur le fond.

Il est ainsi possible de changer la poche souple tout en gardant le fond.

Selon un mode de réalisation, le coussin gonflable est fixé de manière permanente sur le fond.

Selon un mode de réalisation, la poche souple, dans la position déployée du coussin gonflable, présente deux panneaux parallèles opposés, sensiblement perpendiculaires au plan du fond et s'étendant depuis les bords latéraux du fond, le moyen de contention du coussin gonflable étant constitué par un moyen d'accrochage d'un desdits deux panneaux coopérant avec un moyen d'accrochage complémentaire porté par l'autre desdits deux panneaux pour les accrocher l'un à l'autre et ainsi comprimer le coussin gonflable et obturer son entrée d'air, ledit moyen d'accrochage coopérant en outre facultativement avec un moyen d'accrochage complémentaire porté par le fond ou la poche souple.

Selon un mode de réalisation, le bord de la face arrière de la poche souple opposé au bord fixé au fond du conteneur porte un moyen d'accrochage coopérant avec un moyen d'accrochage complémentaire porté par le bord de la face avant fixé au fond du conteneur pour constituer le moyen de contention du coussin gonflable, le comprimant et obturant son entrée d'air, les deux faces étant alors attachées suivant une ligne sensiblement parallèle aux bords avant et arrière du fond du conteneur.

Selon un mode de réalisation, le fond porte deux panneaux latéraux indépendants de la poche souple, s'étendant suivant les bords latéraux du fond, le moyen de contention du coussin gonflable étant constitué par un moyen d'accrochage de l'un des panneaux coopérant avec un moyen d'accrochage complémentaire porté par l'autre des panneaux pour les accrocher l'un à l'autre et ainsi comprimer le coussin gonflable et obturer son entrée d'air, ledit moyen d'accrochage coopérant en outre facultativement avec un moyen d'accrochage complémentaire porté par le fond du conteneur, un rabat ou la poche souple.

Les moyens peuvent alors être portés par la face du fond tournée vers l'utilisateur en utilisation ou sur la face du fond opposée sur laquelle est fixée le coussin.

Selon un mode de réalisation, le fond porte un seul panneau latéral indépendant de la poche souple, s'étendant depuis l'un des bords latéraux du fond, ledit panneau latéral étant muni d'un moyen d'accrochage apte à coopérer avec un moyen d'accrochage complémentaire porté par l'autre bord latéral du fond, pour constituer le moyen de contention du coussin gonflable, le comprimant et obturant son entrée d'air.

Selon un mode de réalisation, le moyen d'accrochage et le moyen d'accrochage complémentaire sont un ou plusieurs parmi un système à boucles et crochets, un système de bouton pression, un système à boucles et oeillets, ou un système de demi-ceinture portant une boucle coopérant avec une demi-ceinture portant un crochet pour accrocher les panneaux l'un à l'autre.

Pour le mode de réalisation à boucles et crochets, l'un des panneaux portant des boucles coopère avec des crochets portés par l'autre panneau pour les maintenir accrochés l'un à l'autre ou une pièce de liaison portant des boucles se fixe sur les deux panneaux portant des crochets.

Selon un mode de réalisation, la largeur des panneaux est sensiblement égale à la moitié de la largeur du fond, et lesdits panneaux sont solidarisés bord à bord suivant une ligne médiane du fond parallèle aux bords latéraux de celui-ci.

Selon un mode de réalisation, le moyen d'accrochage et le moyen d'accrochage complémentaire sont constitués par un système de laçage composé de crochets et d'un lien rétractible qui encercle lesdits crochets.

Selon un mode de réalisation, le moyen d'accrochage et le moyen d'accrochage complémentaire sont constitués par un système à boucles et oeillets, les boucles étant amenées à passer à travers les oeillets disposés en regard et étant ensuite traversées par un câble de libération, ledit câble de libération étant relié à au système d'ouverture du conteneur.

L'invention a également pour objet un harnais de parachutiste ou de colis largué, caractérisé par le fait qu'il est équipé d'un conteneur tel que décrit ci-dessus.

L'invention a également pour objet un sac-harnais de parachutiste, caractérisé par le fait qu'il est équipé d'un conteneur tel que décrit ci-dessus.

D'autres caractéristiques et avantages de l'invention apparaîtront à la lecture de la description suivante de diverses variantes de réalisation s'appuyant sur des figures, parmi lesquelles :
La Figure 1 est une vue du mode de réalisation préféré du conteneur de l'invention en position fermée ;
La Figure 2 est une vue de dessus d'un parachutiste en chute libre équipé d'une variante du conteneur de l'invention en position fermée ;
La Figure 3 est une vue représentant le conteneur de la Figure 2 en position ouverte et détaché du harnais ;
La Figure 4 est une vue d'une variante du mode de contention et de fermeture du mode de réalisation préféré ;
La Figure 5 est une vue de côté du parachutiste équipé d'une variante du conteneur de l'invention en position ouverte durant la descente sous voilure ;
La Figure 6 est une vue du conteneur de la Figure 5 en position ouverte et détachée du harnais avant son reconditionnement ;
La Figure 7 est une vue d'une étape de montage sur le harnais, du conteneur de la Figure 5 en position fermée avec le « mou » des sangles d'attache non résorbé ;
La Figure 8 est une vue de ¾ avant d'un conteneur selon un autre mode de réalisation conforme à l'invention, disposé sur un harnais passager tandem, représenté à l'état ouvert et la poche souple gonflée ;
La Figure 9 est une vue de dos du conteneur de la Figure 8 représenté à l'état fermé avant utilisation, avec un parachutiste équipé de l'invention ;
La Figure 10 est une vue de dos du conteneur de la Figure 8 représenté à l'état ouvert avec un parachutiste équipé de l'invention ;
La Figure 11 est une vue du dos de la poche souple amovible disposée dans le conteneur décrit en figures 8, 9 et 10 ;
La Figure 12 est une vue du fond opposé du conteneur de maintien des figures 8, 9 et 10 sans la poche souple de la Figure 11;
La Figure 13 est une vue schématique de dessous d'un mode simplifié de l'invention ;
La Figure 14 est une de côté d'un parachutiste équipé du dispositif de la Figure 13 en position ouvert durant la descente sous voilure ;
La Figure 15 est une vue de dessous d'une palette de colis largué équipée du conteneur de l'invention

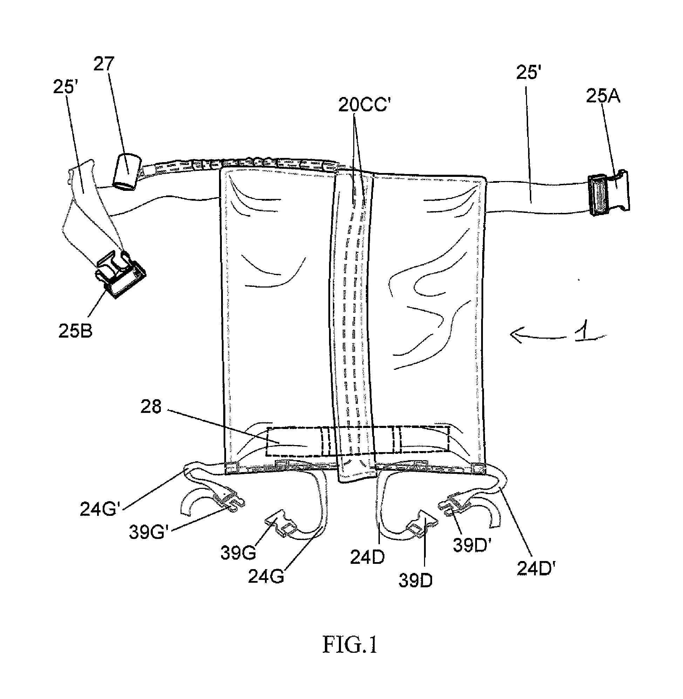

La Figure 1 montre le mode de réalisation préféré du conteneur 1 de l'invention en position fermée avant son utilisation.

Afin de pourvoir à la double fonction de maintien et d'ajustage du conteneur 1 à l'utilisateur, on dispose de sangles ou tout type d'élément souple longitudinal destiné à assurer la fixation et la liaison du conteneur 1 à l'utilisateur.

Le montage du haut du conteneur 1 sur le parachutiste est assuré grâce au concours d'une sangle abdominale constituée de deux demi-ceinture d'attache 25' situées depuis les angles supérieurs du fond du conteneur et aptes à coopérer ensemble de manière à encercler la taille de l'utilisateur, cette disposition est préférée car elle offre une simplicité d'utilisation et une indépendance du harnais.

Une demi-ceinture d'attache 25' est à longueur fixe munie d'une boucle d'accrochage femelle 25A tandis que l'autre demi-ceinture d'attache 25' est munie d'une boucle d'accrochage mâle 25B complémentaire de la précédente, coulissant sur sa longueur de sangle rendant cette dernière auto-réglable, une fois les boucles encliquetées.

La poignée de commande d'ouverture 27 est fixée sur une des deux demi-ceinture d'attache 25', elle nécessite d'être actionnée pour procéder au déploiement de la poche souple et à son gonflage dans le flux d'air.

Par ailleurs, pour assurer le maintien du bas de conteneur 1, on a disposé à chaque angle inférieur du conteneur 1 des drisses de maintien 24D' et 24G' destinées à passer sur et autour des cuisses de la personne ou autour des sangles cuissardes du harnais, en coopération avec des drisses de maintien 24D et 24G situées à hauteur du premier tiers droit et gauche en bas du conteneur 1, cette disposition permet d'empêcher que le bas de conteneur 1 ne remonte grâce au blocage et serrage effectué autour des cuisses de l'utilisateur ou des sangles cuissardes du harnais, par un moyen de boucles complémentaires entre elles, et solidaires de chacune desdites drisses.

Les drisses de maintien 24D et 24G portant à leurs extrémités la boucle de retenue femelle 39D et 39G sont à longueur fixe et destinées à coopérer avec les boucles complémentaires mâles 39D' et 39G'.

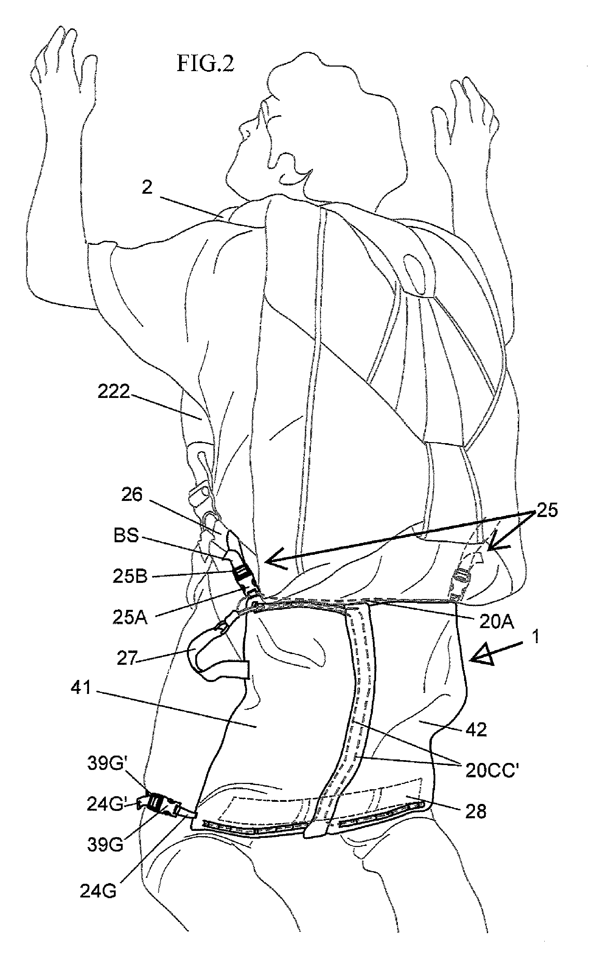

Le mode de réalisation représenté à la Figure 2 représente une variante du conteneur de maintien disposé sur le harnais 2 d'un parachutiste pendant la chute libre, et avant son utilisation durant la descente sous voilure.

Le montage du haut du conteneur 1 diffère de la Figure 1 en ce qu'il est relié au harnais 2 grâce au concours d'un jeu de deux sangles d'attache 25 possédant chacune une branche à longueur auto-réglable, disposées depuis les angles supérieurs du fond du conteneur 1.

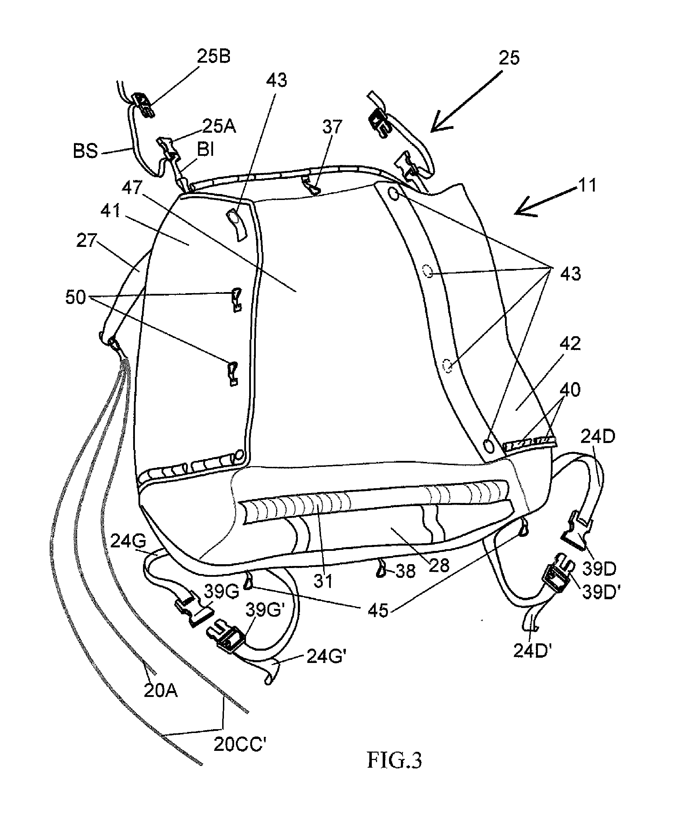

Lesdites sangles d'attache 25 visibles en Figure 3, sont chacune pourvues d'une Branche Inférieure BI à longueur modulable et d'une Branche Supérieure BS à longueur réglable permettant le cerclage et l'ajustage du haut du conteneur 1 soit, autour de la sangle dorsale lombaire 26 du harnais 2, soit autour des sangles principales 222 du harnais ou des anneaux de liaison hanche permettant ainsi, de coupler le conteneur 1 au harnais 2.

Après encliquetage des deux boucles auto-bloquantes 25A et 25B ensemble, la position du conteneur 1 par rapport au harnais 2 est obtenue par réglage en longueur de la Branche Supérieure BS, dans la partie griffée de la boucle 25B.

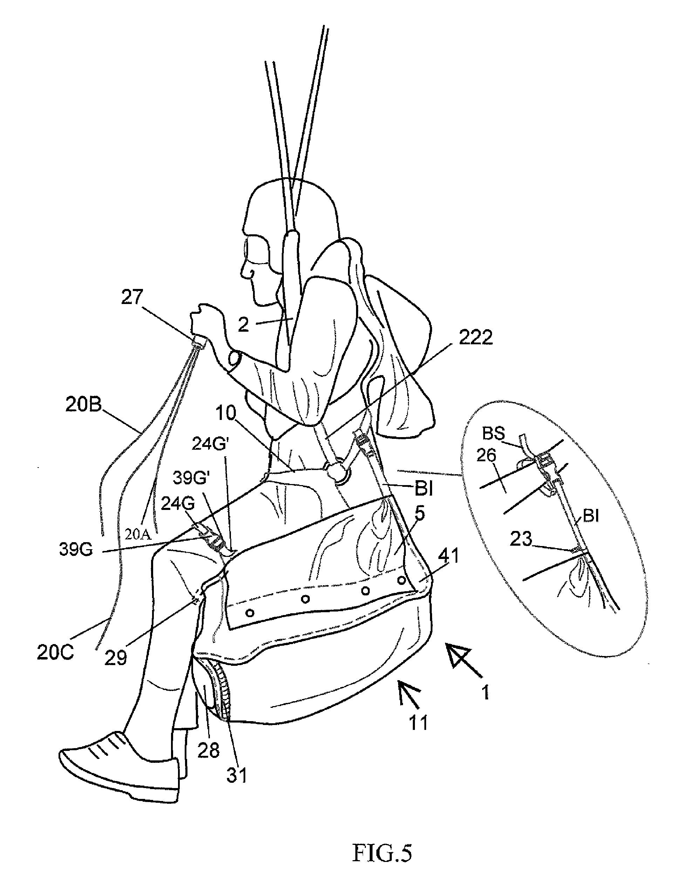

Une fois le harnais 2 équipé du conteneur 1, ce dernier doit être à la fois plaqué contre l'utilisateur pendant la phase de chute libre précédent l'ouverture du parachute comme montré en Figure 2 puis offrir au parachutiste une liberté de mouvement pendant la descente sous voilure comme montré en Figure 5.

Par conséquent, lors du montage du conteneur 1 au harnais 2, on a réduit la longueur de la sangle d'attache 25 par rétraction du « mou » de la Branche Inférieure BI afin que le conteneur 1 qui équipe temporairement le harnais 2 soit maintenu proche de l'utilisateur et ne flotte pas en chute libre.

Cependant pour assurer le confort du parachutiste après l'ouverture du conteneur durant la descente sous voilure, le conteneur lorsqu'il est relié au harnais doit pouvoir libérer le « mou » de la Branche Inférieure BI en raison de la nécessité d'un mouvement exercé par l'utilisateur dans l'axe longitudinal descendant de la sangle, pour se donner de l'aisance.

Pour obtenir tel résultat, on a ménagé un moyen de connexion/déconnexion du « mou » de sangles illustré en détail Figure 5 et expliqué dans la description qui en est faite. Dans l'exemple donné en Figure 2, un seul câble de libération 20A solidaire de la poignée 27 chemine successivement dans les deux pontets 23 qui traversent les créneaux de chaque boucle femelle 25A afin de réduire le « mou » des Branches Inférieures modulables BI jusqu'à l'ouverture du parachute puis de libérer ledit « mou » durant la descente sous voilure, à la commande de l'utilisateur.

Lorsque les deux panneaux latéraux 41 et 42 sont réunis en position fermée par rapprochement bord à bord ou par superposition d'un panneau latéral sur l'autre effectué de manière perpendiculaire au plan du fond du conteneur 1 quand la poche est déployée, ils forment la fermeture et la protection du conteneur 1.

Ce mode de réalisation du dispositif de l'invention permet de réduire le nombre d'éléments constitutif du conteneur de maintien 1 en supprimant tout type de panneau indépendant 5, 6 tels qu'ils sont décrits ultérieurement dans des variantes de réalisation.

Dans le mode de réalisation de la Figure 2, la poignée de commande d'ouverture 27 se situe sur le côté du conteneur 1 à portée de l'utilisateur, la mise en oeuvre est alors assurée par extraction manuelle réalisée directement par traction sur la poignée 27 qui commande les câbles de libération 20A et 20CC'.

Dans le mode de réalisation montré à la Figure 3,on a représenté le dispositif de la Figure 2 en position ouverte après utilisation et détaché du harnais 2, la poche souple 11 à forme de coussin bombé lors du gonflage, est d'apparence parallélépipédique constituée de panneaux reliés entre eux, composés des panneaux latéraux 41, 42, du fond non visible sur le dessin et du panneau 47 qui s'étend depuis le bord arrière du fond jusqu'au bord avant du fond et relie les panneaux latéraux 41, 42 ensemble.

La fermeture de ce mode de réalisation est assurée par le repliage des bords rabattants des panneaux latéraux 41, 42 de la poche souple 11 et provoque sa transformation en conteneur de maintien, objet de l'invention.

Ce pliage a pour fonction, outre de compacter la poche souple 11 en un ensemble peu encombrant en chute libre, tout en neutralisant le trou d'entrée d'air 28, de permettre de former une enveloppe qui protège le reste de la poche souple 11 des agressions extérieures.

Les différentes phases de pliage de ce mode de réalisation du conteneur de maintien sont :
1) Le bas de la poche souple 11 est replié avec le trou d'entrée d'air 28 escamoté en porte-feuille vers l'intérieur et vers le haut de la poche souple 11 elle-même.
2) les deux panneaux latéraux opposées 41, 42 sont ensuite repliés par leurs bords rabattants à la perpendiculaire par rapport au plan du fond, en se superposant au bas de la poche souple 11 préalablement repliée faisant office de volet d'obturation au trou d'entrée d'air 28.

Les boucles de fermeture 37, 38 disposées à proximité du bord arrière et du bord avant du fond ainsi que les boucles 50 situées sur le bord rabattant du panneau latéral 41 peuvent à distance rapprochée, traverser les oeillets 43 disposés sur les bords rabattants de chaque panneau latéral 41, 42.

Pour maintenir la poche souple 11 pliée sous les panneaux 41, 42 en place, il suffit de faire passer au moins un des deux câbles de libération 20CC' dans les boucles émergeant au-dessus les oeillets 43 des panneaux latéraux 41, 42 à commencer par la boucle de fermeture supérieure 37.

On passe ensuite au moins un des deux câbles de libération 20CC' dans les boucles 50 émergeant des oeillets 43 du panneau latéral 42 puis on traverse la boucle de fermeture inférieure 38 émergeant au-dessus des oeillets 43 du bas des panneaux latéraux 41,42.

Afin d'améliorer l'étanchéité de la prise au vent du trou d'entrée d'air 28 lorsque la poche souple 11 est en position stockée, on a disposé des boucles 45 sur le bord avant du fond, destinées à coopérer avec un espace ménagé entre des guides 40 situés sur le bas des panneaux latéraux 41, 42,

Ainsi pour parfaire le maintien du lest 31 en place et assurer l'étanchéité d'obturation du trou d'entrée d'air 28, empêchant ainsi durant la sortie d'avion et la chute libre, le vent relatif de s'engouffrer dans la poche souple 11, on passe de chaque côté du bas des panneaux latéraux 41, 42 l'extrémité d'un des deux câbles 20 CC' dans les guides 40 sans omettre de lui faire traverser les boucles de fermeture 45, lors du passage dédié à cet effet, entre les guides 40 disposés côte à côte.

La distinction de l'une et l'autre des branches BI et BS de chacune des sangles d'attache 25 est remarquable par une boucle autobloquante femelle 25A disposée à l'extrémité de la Branche Inférieure BI qui est opposée à sa fixation au conteneur 1, tandis que la Branche Supérieure BS est équipée d'une boucle mâle 25B coulissante destinée à coopérer avec sa complémentaire la boucle femelle 25A.

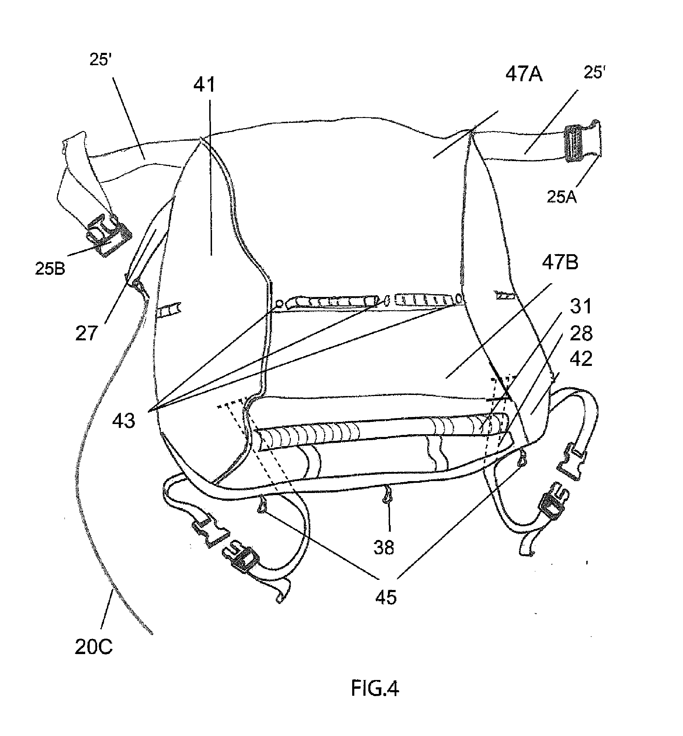

Dans la variante de fermeture du conteneur de l'invention, montrée en Figure 4 on a représenté le dispositif en position ouverte après utilisation et détaché du harnais, la poche souple 11 constituée de panneaux reliés entre eux comme cité précédemment, est apte à être maintenue en contention par la fermeture du panneau supérieur 47A qui émane du bord arrière du fond et qui vient se superposer sur le panneau inférieur 47B émanant du bord avant du fond, tandis que les panneaux latéraux 41, 42 viennent se replier en porte-feuille par en-dessous les dits panneaux 47A et 47B, tel repli sert de volet d'obturation au trou d'entrée d'air 28.

L'ensemble est maintenu verrouillé avec le câble de libération 20C après coopération des oeillets 43 inhérents au panneau supérieur 47A avec les boucles de fermeture correspondantes telles les boucles de fermeture 38, 45 situées sur le bord avant du fond.

Dans la Figure 5, on a représenté une variante du conteneur de la Figure 2, en position ouverte équipant un parachutiste représenté de côté lors de l'atterrissage.

Le conteneur 1 permettant d'intégrer la poche souple 11 faisant office de dispositif d'amortissement de chocs, possède le fond qui vient en appui contre le bas du dos et l'arrière des cuisses de l'utilisateur et constitue par son côté opposé le fond interne de la poche souple 11.

Cette variante de réalisation diffère en ce sens que le conteneur 1 dispose de panneaux indépendants verrouillants 5, 6 fixés suivants les bords latéraux du fond et qui se superposent de manière indépendante aux panneaux latéraux 41, 42 de la poche souple 11.

La traction effectuée par l'utilisateur sur la poignée de commande d'ouverture 27 a comme représenté en détail, assuré conjointement : le dégagement à droite de la longueur de la Branche Inférieure BI de la sangle d'attache 25 par retrait du câble de libération 20B, ainsi que conjointement le dégagement à gauche de la longueur de la Branche Inférieure BI de la sangle d'attache 25 par retrait du câble de libération 20A, puis l'ouverture totale du conteneur 1 s'est réalisée par prolongement du geste sur la poignée de commande d'ouverture 27, cette dernière action assure le dégagement du câble de libération le plus long 20C en dehors des boucles de fermeture du conteneur 1.

Dans le dispositif représenté, la poche souple 11 est gonflée grâce à son déplacement vers l'avant par son trou d'entrée d'air 28 situé sur la face avant tournée en direction de la partie inférieure des jambes de l'utilisateur, la poche souple 11 gonflée, les panneaux latéraux 41, 42 repoussent les panneaux indépendants 5, 6 devenus flottants et sans plus d'utilité.

Pour permettre l'accès du flux d'air dans le trou d'entrée d'air 28 et accélérer le gonflage du dispositif amortisseur de chocs, le délestage de la poche souple 11 repliée sur elle-même s'est effectué sous l'effet du lest 31 situé dans un compartiment dédié à cet effet

Lorsque employés sur la poche souple 11 comme montré Figure 5, les moyens de lestage sont répartis en longueur pour éviter la déformation de la poche souple 11 et situés en dessous du trou d'entrée d'air 28, ils peuvent aider au maintien en forme dudit trou.

D'autre part, on remarque que selon la configuration du harnais 2 pour lequel est destiné l'équipement, on peut se dispenser d'employer du lest, ainsi on utilise de préférence le lest lorsque le conteneur 1 équipe un harnais passager tandem, car la proximité du pilote placé derrière le conteneur 1 a tendance à conserver comprimé le conteneur 1 entravant après l'ouverture de celui-ci, le délestage possible de la poche souple 11 à cause de la friction provoquée par la proximité du corps du pilote.

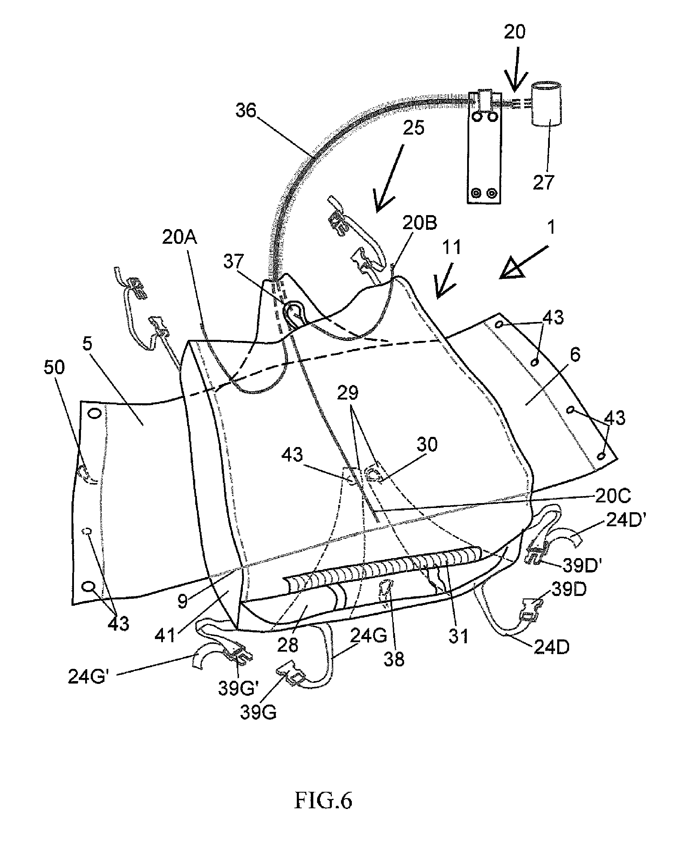

On a représenté à la Figure 6 le dispositif de la Figure 5, détaché du harnais 2 pour exemple de réalisation de fermeture après utilisation.

Pour procéder à la refermeture du conteneur 1 après utilisation, on dégonfle et réalise ensuite le pliage de la poche souple 11 par repli du bas de la poche souple 11 vers le haut selon la ligne de pliage inférieure 9, action qui recouvre le trou d'entrée d'air 28 puis les deux panneaux latéraux opposées 41, 42 sont repliés vers l'intérieur perpendiculairement à la ligne de pliage 9 en se superposant au bas de la poche souple 11 préalablement replié, faisant office de volet d'obturation au trou d'entrée d'air 28, de sorte que l'on obtient ainsi une succession de pliures, afin qu'aucune partie de la poche souple 11 ne dépasse du conteneur 1.

Pour réaliser le verrouillage du conteneur 1 on fait coopérer les moyens d'assemblage par passage des oeillets 43 de chaque panneau de fermeture latéral 5,6 dans l'extrémité de la boucle de fermeture associée, le panneau latéral qui possède au moins une ou des boucles de fermeture est disposé en-dessous l'autre panneau latéral possédant les oeillets 43 de fermeture comme connu de l'état de l'art.

La boucle de fermeture supérieure 37 permet le passage de chacun des oeillets supérieurs 43 de chaque panneau indépendant 5 et 6 avant son verrouillage par le câble de libération 20C destiné à cet effet, l'opération de verrouillage par passage du câble de libération 20C étant répétée entre chaque moyen d'assemblage.

On poursuit la fermeture du conteneur 1 après passage de la boucle de fermeture 50 située sur le panneau indépendant 5 dans l'oeillet 43 correspondant et inhérent à l'autre panneau indépendant 6 comme connu de l'état de l'art, en assurant le verrouillage au moyen du câble de libération 20C.

Pour parfaire l'étanchéité de fermeture du bas du conteneur 1, il est prévu dans le mode perfectionné de l'invention représenté en Figure 6, deux mini-rabats inférieurs 29 de forme triangulaire de type « oreilles d'ânes » qui viennent recouvrir le bas du conteneur 1 afin de mieux obturer le trou d'entrée d'air 28 et maintenir en place le lest 31, un des mini-rabats 29 de ce type possède un oeillet 43 tandis que l'autre mini-rabat 29 possède une boucle de fermeture 30 appelée à coopérer ensemble avec les deux avants derniers oeillets 43 des panneaux indépendants 5,6.

On superpose préalablement et successivement l'oeillet 43 inhérent au mini-rabat 29 sur celui qui possède la boucle de fermeture 30 puis les avants derniers oeillets inférieurs 43 des deux rabats latéraux 5,6 avant de faire traverser le câble 20C dans la boucle 30 émergeante.

Pour assurer la fermeture totale du conteneur 11, on utilise ensuite la boucle inférieure 38 située à la périphérie du fond du conteneur 1, de cette manière, on maintient la poche souple 11 comprimée pour obturer le trou d'entrée d'air 28 et éviter ainsi le gonflage intempestif en chute libre de la poche souple 11.

Pour procéder à l'ajustement du conteneur autour des cuisses, on procède à la fermeture des drisses de maintien 24D et 24D', ainsi que 24G et 24G' après encliquetage des boucles mâles 39D', 39G' et femelles 39D, 39G ensemble, l'utilisateur tire ensuite l'extrémité libre de chaque drisse de maintien 24D' et 24G', il en résulte un mouvement progressif de resserrement des deux drisses de maintien 24D' et 24G' autour des cuisses jusqu'à un réglage déterminé en fonction de l'épaisseur des cuisses de l'utilisateur, les deux boucles de retenue femelles 39D et 39G coopérant avec les boucles mâles 39D' et 39G', bloquent l'ensemble des drisses de maintien en position et empêchent tout desserrage, contribuant ainsi à la mise en tension du bas du conteneur 1 et à la bonne mise en pression du dispositif d'amortissement de chocs lorsque ce dernier est activé.

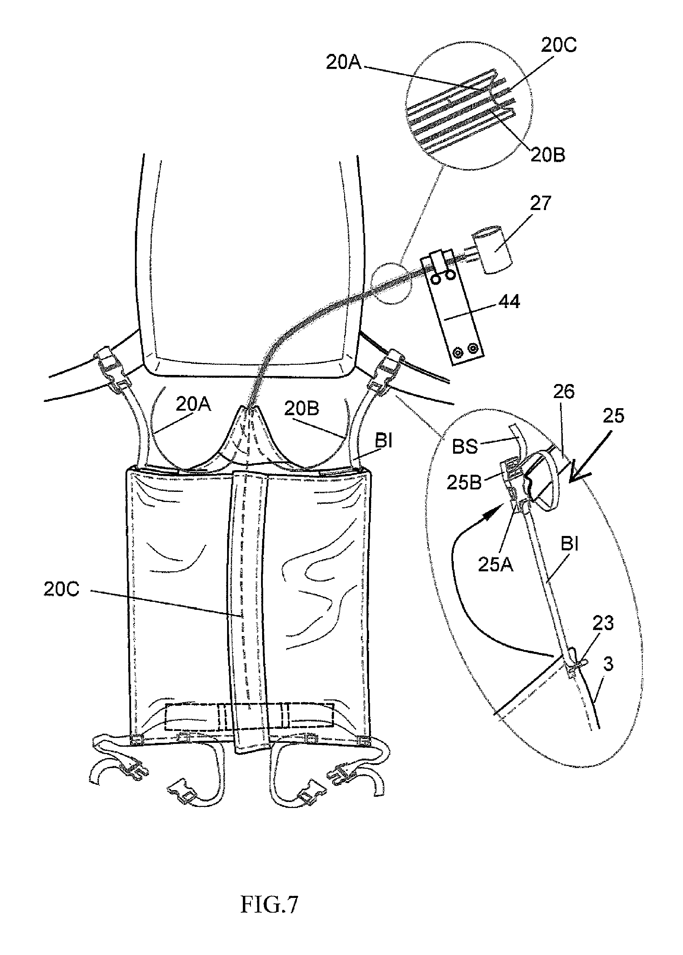

En Figure 7 on a représenté une étape du montage du conteneur 1 de la Figure 5 sur le harnais 2.

Après avoir obtenu l'étape finale de repliage telle que expliquée dans la Figure 6, on procède au montage du haut du conteneur 1 au harnais 2.

Pour s'inter-verrouiller les sangles d'attache 25 sont équipées comme précité, d'une boucle d'attache femelle 25A fixée par couture à l'extrémité supérieure de la branche fixe BI, et d'une boucle de fermeture et de serrage mâle 25B coulissant librement sur la Branche Supérieure BS. Cette disposition permet le passage de la Branche Supérieure BS en cercle autour de chaque partie apparente de la sangle dorsale lombaire 26, ou autour des anneaux de liaison hanche, ou encore autour des sangles principales 222 du harnais, et permet ainsi de retenir la partie haute du conteneur 1 au harnais 2.

Dans le dispositif selon l'invention, représenté en Figure 7 on a procédé au réglage en longueur des Branches Supérieures BS des sangles d'attache 25 après cerclage autour de la partie apparente de la sangle dorsale lombaire 26 et après avoir réuni par encliquetage la boucle de retenue mâle 25B située sur la partie haute ou descendante de la Branche Supérieure BS avec la boucle de retenue femelle 25A complémentaire, située sur la partie basse ou montante à mi-chemin de la sangle d'attache 25.

Le « mou » restant de la sangle d'attache 25 apparent en Figure 7 est constitué par la Branche Inférieure BI, ce « mou » est résorbable par le fait que chaque Branche Inférieure BI est de longueur modulable grâce au passage d'un pontet 23 fixé en haut du fond de conteneur 1, à travers le créneau aménagé dans le cadre de support rectangulaire de la boucle femelle 25A, ledit pontet 23 est ensuite traversé par l'un ou l'autre des câbles de libération 20A, 20B réduisant temporairement la longueur de la Branche Inférieure BI jusqu'à l'action sur la poignée de commande d'ouverture 27.

On remarque qu'un résultat sensiblement identique peut être obtenu en disposant un matériau élastique aux sangles d'attaches 25 permettant d'obtenir un débattement nécessaire au confort lorsque le conteneur est relié au harnais d'un parachute de type «aile» (ram-air).

La poignée de commande d'ouverture 27 est située séparée du conteneur 1, de manière déportée afin de permettre grâce au manchon de maintien 44, son placement sur le harnais 2 à un emplacement préféré par l'utilisateur, elle se prolonge par un triple câble jumelé de libération 20 montré en détail dans le haut de la Figure 7, et constitué des câbles 20A, 20B et 20C destinés à être tirés manuellement après l'ouverture du parachute principal, pour provoquer, la libération du « mou » de sangle de chaque Branche Inférieure BI entre le conteneur 1 et le harnais 2, et concomitamment l'ouverture du conteneur.

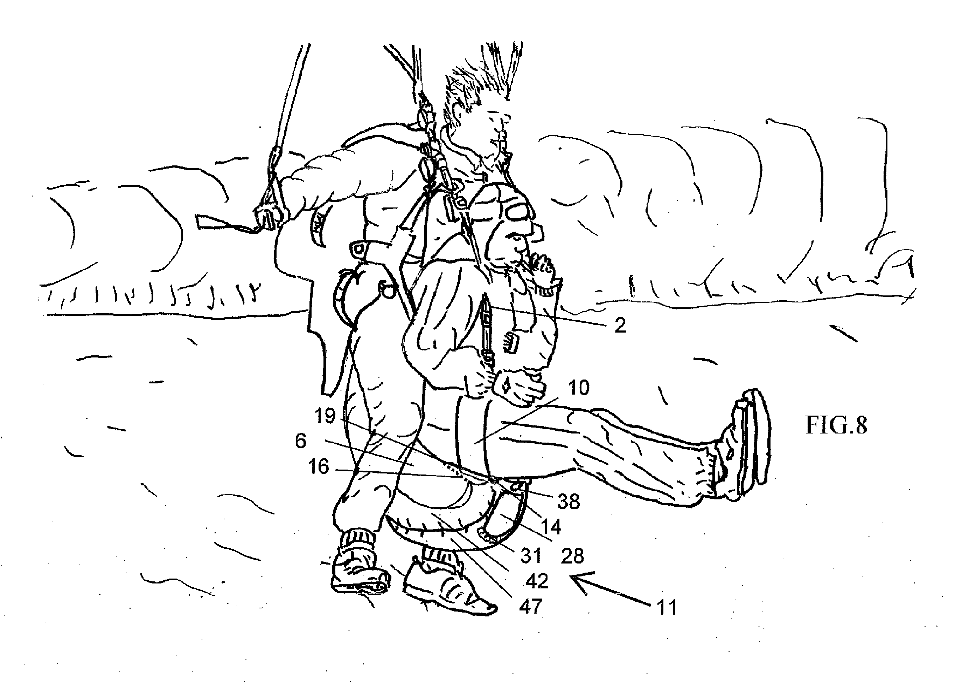

La Figure 8 est une perspective générale du conteneur de l'invention disposé de manière permanente sur un harnais passager tandem et représenté en position ouverte avec la poche souple 11 servant de dispositif d'amortissement de chocs, constituée d'un seul compartiment, déployée dans sa configuration gonflée à volume maximal durant la descente sous voilure.

Dans la configuration représentée Figure 8, le conteneur objet de l'invention dispose de manière symétrique de deux panneaux indépendants de fermeture latérale 5, 6 dont seul le 6 est apparent, on remarque de manière similaire à la Figure 5 que lors du gonflage de la poche souple 11, le panneau indépendant 6 devenu inopérant s'écarte naturellement sur son côté, à l'identique du panneau indépendant 5 non visible sur la figure.

L'écartement des panneaux indépendants 5, 6 est facilité par l'action de drisses de rappel 16, 17 solidaires par une de leur extrémité à l'angle inférieur de chaque panneau indépendant 5, 6 et couplées par l'autre extrémité à la poignée de commande d'ouverture 27 grâce à l'intermédiaire d'un cordon élastique 35 ; aidant par la présente la poche souple 11 à se délester et se déplier automatiquement. Ainsi après avoir actionné la poignée 27 qui sert conjointement de commande d'ouverture du conteneur 1 et de rappel des panneaux indépendants 5, 6 par leur drisse de rappel respective 16, 17, on rappelle en forme de coin vers l'extérieur l'angle inférieur libre de chaque panneau indépendant 5, 6 ce qui assure leur écartement l'un par rapport à l'autre. Une telle conception a donc l'avantage d'ouvrir le conteneur 1 et d'aider à déployer la poche souple 11 sans autre action manuelle pour mettre en oeuvre le dispositif d'amortissement de chocs.

Le maintien du bas du conteneur 1 est assuré en plus des coutures faites sur le harnais 2, par des sangles de guidage 19 solidaires du conteneur 1 et par la liaison entre harnais 2 et conteneur 1 réalisée au moyen de maillons souples ou métalliques à fermeture rapide 14 entre des pontets disposés sur le conteneur 1 et des points d'accrochage situés sur les protège-cuissardes 10 du harnais 2.

Cette dernière disposition permet d'assurer notamment la mise en tension latérale du bas du conteneur 1, selon un écartement d'une cuisse à l'autre lors de la descente sous voilure, situation qui favorise le déploiement de la poche souple 11 et son gonflage dans le vent relatif réalisé par l'exposition du trou d'entrée d'air 28 situé sur le panneau 47, plus exactement sur la face avant du coussin gonflable, dirigée vers la partie inférieure des jambes de l'utilisateur.

On remarquera que bien que les maillons de liaison 14 soient utiles pour aider à la mise en tension latérale du fond du conteneur 1 et par conséquent de la poche souple 11 dans une position déterminée, ils ne sont pas indispensables à un fonctionnement correct du dispositif et peuvent être supprimés.

Le mode de réalisation montré en Figure 8 assurant le maintien du conteneur 1 au niveau des protèges-cuissardes 10, représente une version « courte » du conteneur en comparaison des exemples précités et par conséquent, laisse libre le passage d'une corde de délestage de charge entre les cuisses de l'utilisateur.

Selon l'effet recherché on peut assurer une surface de protection aux membres inférieurs de l'utilisateur supérieure que celle représentée en Figure 8, en prolongeant le conteneur 1 au-delà des protège-cuissardes 10, à condition de rajouter des drisses de maintien 24 et leurs boucles de retenue 39 associées en bas du conteneur 1 prolongé comme représenté en Figure 5, afin de solidariser le prolongement du bas du conteneur 1 dans une partie inférieure des cuisses de l'utilisateur et permettre la mise en forme de la poche souple 11.

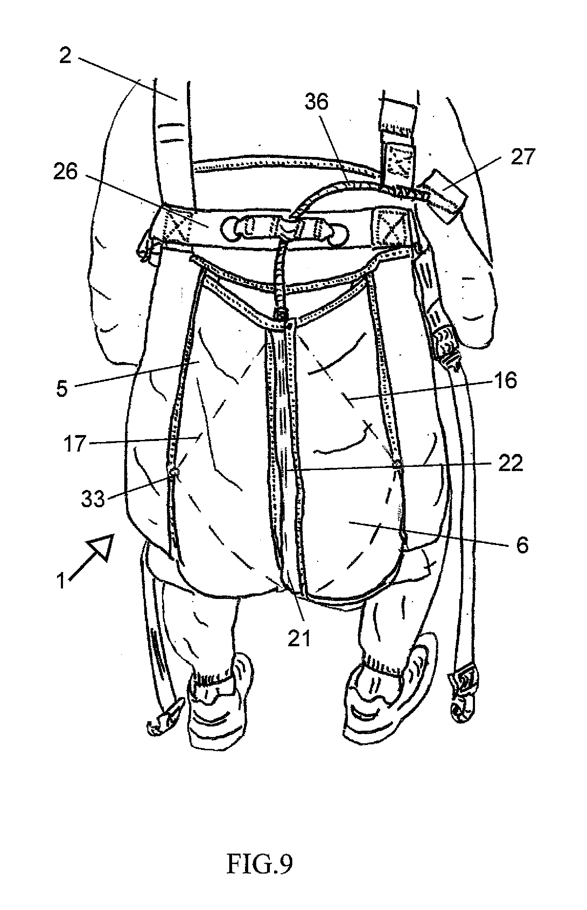

La Figure 9 est une vue de dos du même conteneur de la Figure 8 représenté dans l'état précédent son ouverture.

Dans ce mode de réalisation de l'invention, les moyens d'accrochage du fond du conteneur 1 au harnais 2, sont constitués par des coutures de maintien situées en haut du conteneur 1 à proximité ou sensiblement à hauteur de la sangle dorsale lombaire 26, le "mou" nécessaire à l'utilisateur pour reculer dans le harnais 2 durant la descente sous voilure est disposé par la conception de plis d'aisance dans le fond du conteneur 1.

La disposition du conteneur 1 fermé tel que représentée Figure 9 est parfaitement adaptée à la chute libre avec un faible encombrement en épaisseur et neutralisant la poche souple 11 du flux d'air.

La gaine de protection 36 de commande d'ouverture intègre le passage de câble(s) de libération 21, (22) reliés par une extrémité à la poignée de commande 27 ainsi que le cordon élastique 35 non représenté, qui commande le retrait des drisses de rappel 16, 17 dont les extrémités opposées sont fixées à chaque angle inférieur libre des panneaux indépendants 5,6.

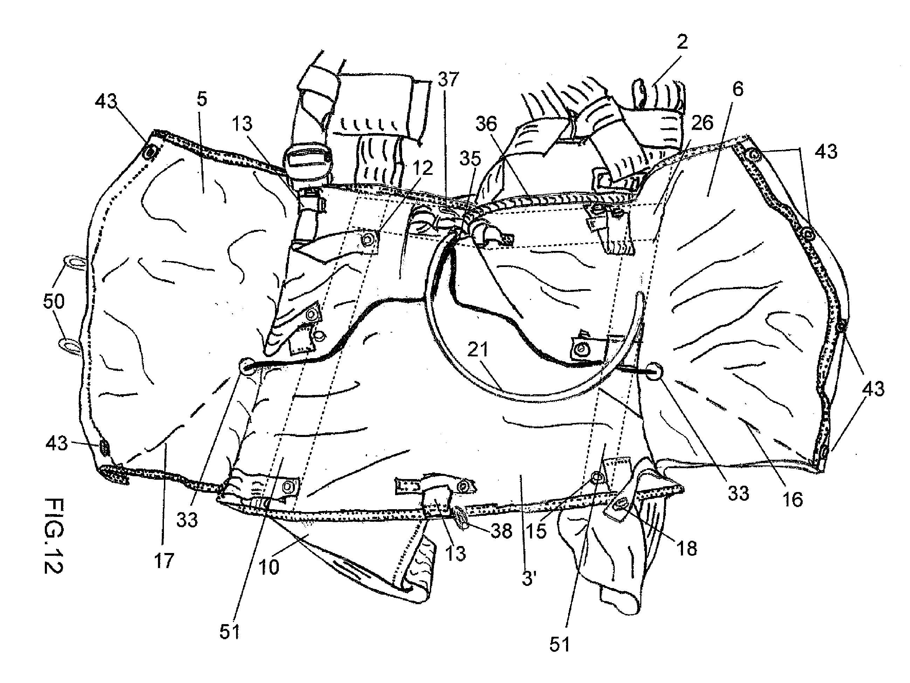

Les drisses de rappel 16, 17 sont protégées en partie par une double paroi incluse dans les panneaux indépendants 5, 6 et cheminent chacune à travers un anneau de passage 33 posé sur le bord intérieur desdits panneaux indépendants et dont le fonctionnement est expliqué en détail en Figure 12.

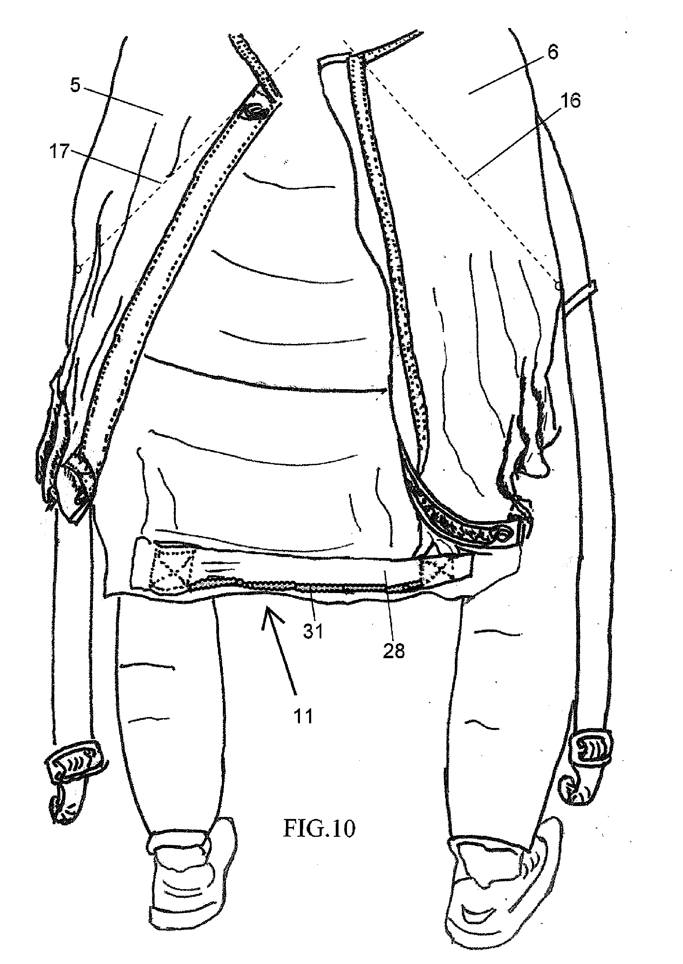

Dans la Figure 10 le parachutiste vu de dos a actionné l'ouverture du conteneur 1 pour obtenir un résultat tel que représenté de côté à la Figure 8, les panneaux indépendants 5, 6 se sont écartés naturellement par le bas sous l'effet combiné des drisses de rappel 16, 17 qui rappellent l'angle inférieur libre de chaque panneau indépendant 5, 6 en forme de coin vers l'extérieur. Le tissu plissé à l'angle inférieur de chaque panneau indépendant 5, 6 dégage une ouverture du bas du conteneur 1 de sorte que le délestage de la poche souple 11 est facilité. Ainsi le lest 31 aide à la gravitation de la poche souple 11 et la prise au vent du trou d'entrée d'air 28 permet le gonflage et le remplissage de la poche souple 11.

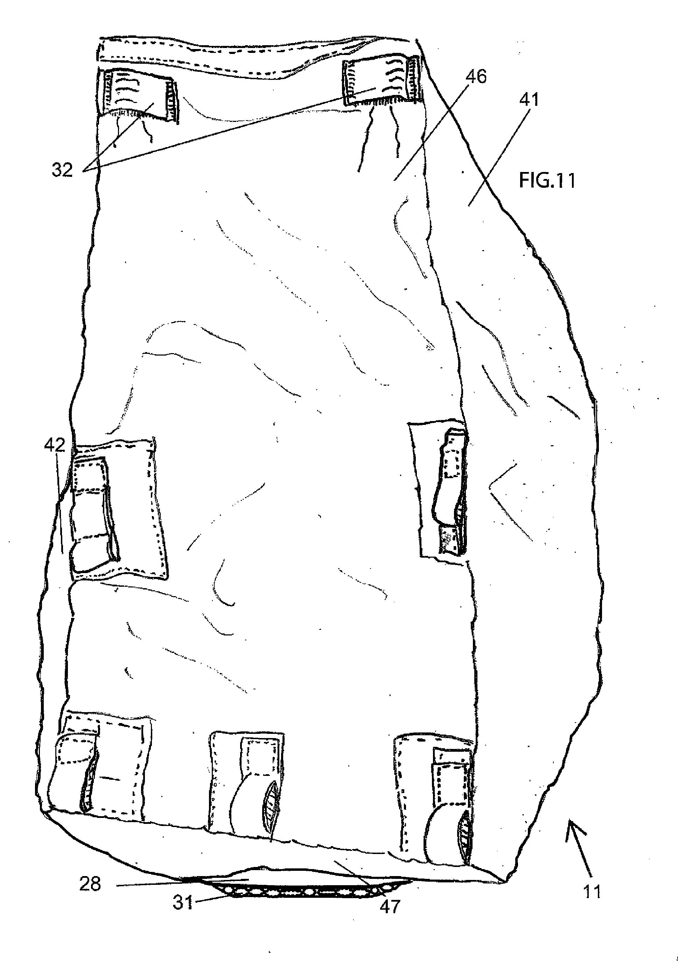

La Figure 11 est une vue du dispositif d'accrochage fixé au dos de la poche souple 11 rendue détachable pour des raisons d'entretien ou autre du conteneur 1 lorsque ce dernier est fixé de manière permanente au harnais 2, tel que représenté dans les figures 8, 9 et 10.

Le dos de la poche souple 11 représenté dans la Figure 11, est constitué par le panneau d'appui sous-cutal 46 qui forme un des 4 panneaux reliés entre eux donnant à la poche souple 11 une forme de croissant bombé lors du gonflage, les autres panneaux visibles sur la Figure 11 sont constitués des panneaux latéraux 41, 42 et de la partie inférieure du panneau 47 qui représente la face avant du coussin gonflable sur laquelle est présente le trou d'entrée d'air 28 mis en forme par le poids du lest 31.

On a représenté en Figure 11 le dos de la poche souple 11 avec un nombre de passants 32 destinés à coopérer avec autant de sanglettes 12 fixées sur le fond opposé 3' du conteneur 1 tel, tel qu'un exemple est donné en Figure 12.

Les moyens de fixation de la poche souple 11 au fond opposé 3' du conteneur 1 peuvent être constitués de différents organes de fixations que ceux numérotés 32 au dos de la poche souple 11, destinés à coopérer avec autant d'organes de fixation complémentaires 13 et 12 situés sur le fond opposé 3' du conteneur 1 tels qu'ils sont représentés en Figure 12.

La Figure 12 est une vue de l'intérieur d'un mode de réalisation du conteneur 1 des figures 8, 9 et 10, représenté ouvert sans la poche souple 11, montrant les faces intérieures des panneaux indépendants 5, 6 et le fond opposé 3' fixé de manière permanente par couture à la sangle dorsale lombaire 26 et aux sangles de rattachement 51 des sangles cuissardes.

On montre notamment le moyen d'accrochage de la poche souple 11, permettant de la disposer sur le fond opposé 3' du conteneur 1 lorsque ce dernier est fixé de manière permanente au harnais 2, ce moyen d'accrochage est constitué par un système de passant 13 fixé sur le fond opposé 3' du conteneur 1 par ses deux extrémités et une sanglette 12 équipée des boutons pression femelle 18 et mâle 15.

Comme montré Figure 12, le fond opposé 3' est équipé de deux passants 13 cousus dans le sens horizontal et cinq passants 13 cousus dans le sens vertical, les sept passants 13 sont chacun constitués d'une bande cousue à ses deux extrémités, croisée d'une sanglette 12 cousue par une seule extrémité, l'autre extrémité de la sanglette 12 est libre et pourvue d'une pression femelle 18 destinée à coopérer avec une pression mâle 15 posée sur le fond opposé 3' du conteneur 1 à distance telle que la longueur de la sanglette 12 permet le passage conjugué du passant 32 et du passant 13 afin de sécuriser l'accrochage de la poche souple 11.

De cette sorte, lors du montage de la poche souple 11 sur le fond opposé 3' du conteneur 1, la sanglette 12 coulisse à travers deux rangées de passants 32 et 13 disposés côte à côte, ainsi la poche souple 11 n'est pas soumise directement à effort lors de l'impact au sol, le passage des sanglettes 12 dans les passants 32 et 13 forme des croisillons.

La disposition des pressions mâles 15 et femelles 18 peut bien entendu être inversée, de même qu'il est possible de disposer les sanglettes 12 et les passants 13 sur le dos de la poche souple 11 tandis que le fond opposé 3' du conteneur 1 est équipé d'un nombre en rapport des seuls passants 32.

Dans une forme de réalisation simplifiée, les moyens d'accrochage constitués sur le fond opposé 3' du conteneur 1 peuvent au risque d'un lien moins conséquent se dispenser du passant 13 situé sur le fond opposé 3' du conteneur 1, également on peut restreindre les moyens d'accrochage à moins d'organes de fixation, par exemple au nombre de quatre organes de fixation situés à chaque angle de la poche souple 11, avec chacun de ces organes complémentaires correspondants situés en regard sur le fond opposé 3'.

Il est prévu des moyens de commande de rappel unique et simultanés des panneaux indépendants 5, 6 agencés avec les moyens d'ouverture du conteneur 1 pour concomitamment, ouvrir le conteneur 1 puis rappeler l'extrémité inférieure libre des panneaux indépendants 5, 6 de sorte qu'ils forment un coin vers l'extérieur comme montré en Figure 8, cette disposition permet à la poche souple 11 de se délester plus facilement par gravitation.

Ce dispositif est caractérisé en ce qu'une drisse de rappel 16, 17 est fixée au coin inférieur libre de chaque panneau indépendant 5 ou 6 et chemine en diagonale sur la largeur de chaque panneau indépendant 5, 6 dans une double paroi avant de traverser un anneau de passage 33 situé à proximité du bord intérieur dudit panneau indépendant, pour rejoindre le fond opposé 3' dudit conteneur 1 et poursuivre indépendamment son cheminement avant sa fixation au cordon élastique 35, lui-même relié à la poignée de commande d'ouverture 27, l'anneau de passage 33 est de préférence un oeillet.

Selon ce mode de réalisation montré à la Figure 12, ces deux drisses de rappel 16, 17 sont constituées par deux portions d'un seul et même brin qui se rejoignent en formant une boucle centrale qui sera reliée à la poignée de commande d'ouverture 27 par un cordon élastique de rappel 35, ce qui a pour avantage de ne maintenir qu'une seule boucle à l'intérieur de la gaine de protection 36. Le cordon élastique 35 est réglable en longueur depuis la poignée de commande d'ouverture 27, le matériau élastique de rappel présente l'avantage, lors de la traction sur la poignée de commande d'ouverture 27 de se tendre avant d'agir sur les panneaux indépendants 5, 6. De cette sorte, le bas des rabats indépendants 5, 6 n'est pas sollicité avant le retrait de l'extrémité du câble de libération 21.

Après utilisation, le dispositif de rappel décrit à la Figure 12 est très rapidement et très simplement remis en oeuvre lors de la phase de repliage par une simple mise en tension de l'extrémité repliée des panneaux indépendants 5, 6 pour obtenir un résultat tel que celui montré en

Figure 12.

Les moyens d'assemblage des panneaux indépendants 5, 6 sont constitués comme connus de l'état de l'art, de boucles de fermeture 37 et 38 disposées au milieu du bord arrière et avant sur le fond ou sur le fond opposé 3' du conteneur 1 ; d'autres boucles 50 et des oeillets 43 situés en regard sur les panneaux indépendants 5, 6 coopèrent les uns avec les autres pour permettre après superposition des panneaux indépendants 5, 6 le verrouillage par le câble 21.

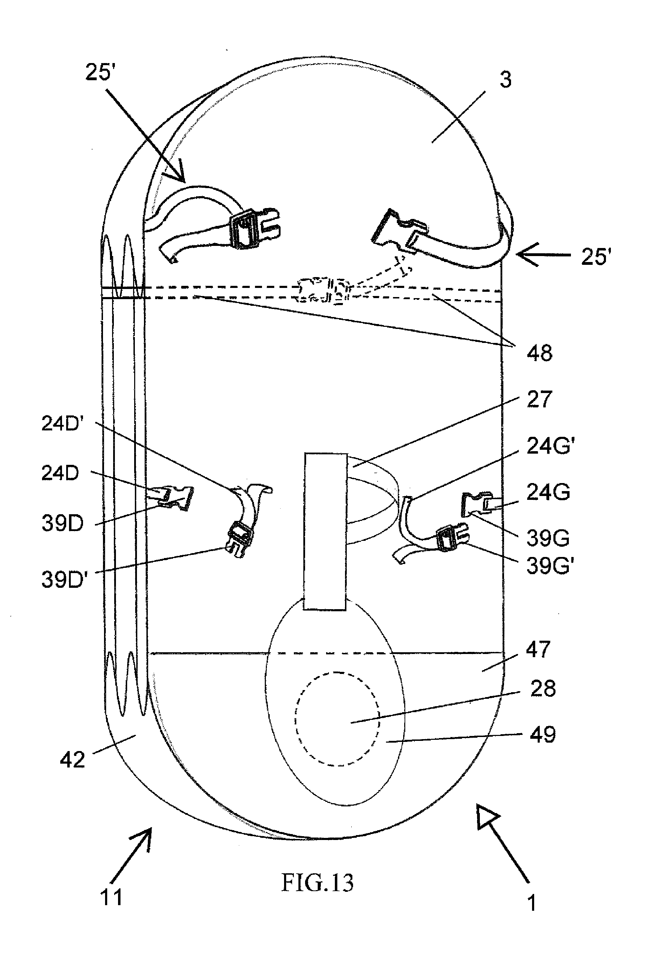

La Figure 13 montre un mode simplifié de réalisation de l'invention dans lequel la poche souple 11 constitue le conteneur 1, composé des panneaux latéraux 41, 42 assemblés en bordure dans la longueur du fond 3, ainsi que le panneau 47 qui s'étend depuis le bord arrière du fond 3 jusqu'à son bord avant.

La Figure 13 montre le conteneur fermé avant son utilisation, le panneau 42, ainsi que le panneau 41 non visible constituent les flancs latéraux de la poche souple 11, et se replient en accordéon entre le fond 3 et le panneau 47, maintenus temporairement par une double drisse d'arrimage 48 encerclant les panneaux ensemble grâce à une boucle de fermeture mâle et femelle aptes à coopérer ensemble.

Le fond 3 destiné à venir contre le bas du dos et l'arrière des cuisses de l'utilisateur possède des drisses de maintien 24 D, 24D' et 24 G, 24G' afin de solidariser le conteneur 1 aux cuisses de l'utilisateur ou aux sangles cuissardes au moyen des boucles 39D, 39D' et 39G, 39G' comme expliqué précédemment, tandis que les demi-ceintures d'attaches 25' disposées de manière identique à la Figure 1 forment une ceinture de sanglage abdominal permettant l'accrochage du haut du conteneur 1 par cerclage autour de la taille de l'utilisateur.

Le trou d'entrée d'air 28 situé sur le panneau 47, à la face avant de la poche souple 11 est obturé par un volet 49 maintenu en place par du ruban agrippant ou tout autre moyen de maintien, le volet 49 est relié à une poignée de commande d'ouverture 27 qui reste solidaire par une de ses extrémités à la poche souple 11 faisant office de conteneur 1.

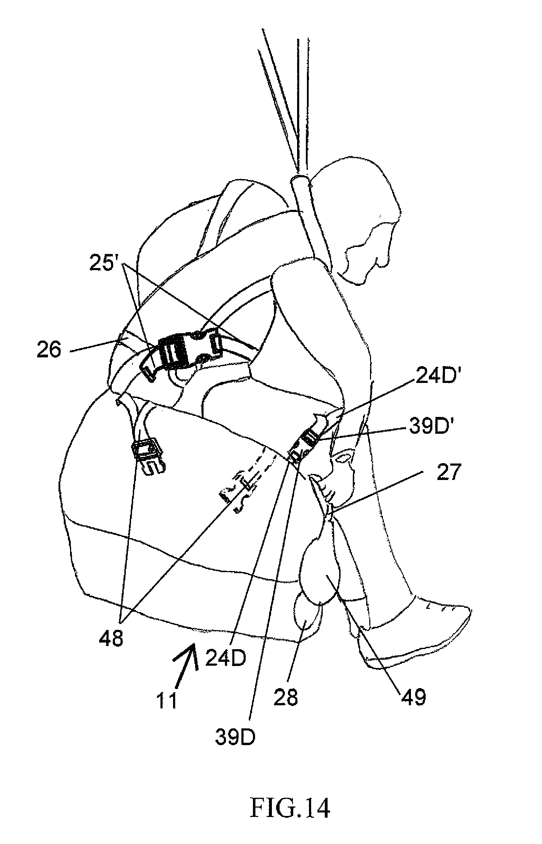

Dans la Figure 14, on a représenté le conteneur 1 de la Figure 13 équipant un parachutiste vue de côté, et mis en oeuvre par l'utilisateur après l'ouverture de son parachute, ainsi une première action consiste à défaire les boucles des drisses d'arrimage 48 afin de délester la poche souple 11 et d'effectuer une traction sur la poignée de commande d'ouverture 27 située en bas du fond 3, ce qui a pour effet de dégager le volet 49 afin de permettre l'ouverture du trou d'entrée d'air 28 et le gonflage de la poche souple 11 lors du déplacement du conteneur vers l'avant durant la descente sous voilure.

Dans cette version simplifiée du conteneur représentée Figure 14, le maintien du haut du fond 3 du conteneur 1 à l'utilisateur est assuré par une attache directe des demi-ceintures d'attaches 25' reliées ensemble à la taille de l'utilisateur au moyen de boucles, de sorte qu'il n'est pas utile de ménager du « mou » entre le conteneur 1 et le harnais 2 pour donner plus d'aisance à l'utilisateur durant la descente sous voilure. Le moyen d'attache du bas du fond 3 du conteneur 1 est réalisé avec des drisses de cuissardes 24 et leurs boucles 39 inhérentes comme cité précédemment.

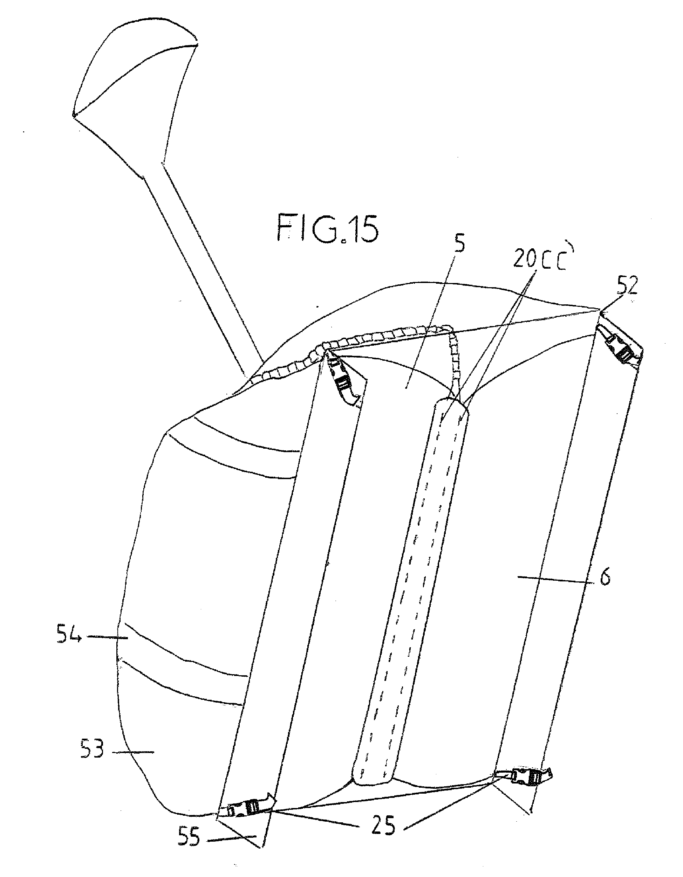

Dans la Figure 15, on a représenté le conteneur de l'invention en position fermée disposé au dos et entre les rails (55) de surélévation d'une palette (52) équipée d'un colis largué (53) harnaché à un harnais (54) à parachute, de sorte que les panneaux 5, 6 ne soient pas en contact avec la soute de l'avion. Les sangles d'attaches 25 maintiennent les quatre angles du conteneur à chaque coin de la palette (52) et le double câble de libération 20CC' est relié par un maillon à un des groupes d'élévateurs appartenant au parachute du colis largué (53), de sorte que lors de l'ouverture du parachute qui se produit soit après le départ du colis hors de l'avion, soit par le déclenchement d'un dispositif baro-variométrique, la mise en tension du groupe d'élévateurs provoque l'extraction du câble de libération 20CC'et le déploiement de la poche souple grâce à un dispositif d'arceau du type décrit lorsque le conteneur équipe un harnais à parachute hémisphérique.

Divers aménagements et variantes à l'emballage sont en outre envisageables.

La fermeture d(u)es dispositif(s) décrit(s) peut aussi être envisagée avec un ordre différent, à condition que les moyens de verrouillage des panneaux soient modifiés, avec toujours le panneau possédant des oeillets en position rabattue au-dessus le panneau où les bouclettes sont inhérentes.

De la même sorte, on peut imaginer que le moyen de contention de la poche souple 11 ne soit constitué que d'un seul panneau indépendant perpendiculaire au plan du fond du conteneur quand la poche est déployée, dont la taille couvre la superficie du fond afin de recouvrir la totalité de la poche souple et muni d'un moyen d'accrochage telle des boucles aptes à coopérer avec un moyen d'accrochage complémentaire tel des oeillets situés en regard sur le fond du côté opposé à celui auquel est fixé ledit panneau indépendant latéral. Le passage à travers les boucles émergeantes d'un câble de libération relié à une poignée de commande d'ouverture, tel que précité permet de garantir la contention et la neutralisation du dispositif.

La disposition des boucles mâles 25B et femelles 25A sur les sangles d'attaches 25 peut être inversé, de même que l'on peut prévoir tout autre dispositif de serrage et de blocage, du type bouton-pression mâle et femelle, comme par ruban agrippant, par un système d'encliquetage par exemple, ou tout autre dispositif connu de l'homme de l'art.

Dans le cadre de l'utilisation du conteneur de l'invention pour des sauts en parachute effectués avec des voiles hémisphériques, on a remarqué que après l'ouverture du conteneur, la vitesse de déplacement du parachute (5 à 6 mètres/seconde) est moindre qu'avec des parachutes de type « aile » (environ 10 m/s), de sorte que le flux d'air obtenu par le déplacement est insuffisant pour obtenir un gonflage spontané de la poche souple.

Pour remédier à cet inconvénient on va forcer l'entrée d'air en disposant un aide au déploiement du panneau pourvu d'entrée d'air, situé sur la face de la poche souple la plus en avant du déplacement, tel panneau possède sur son pourtour un ou des arceau(x) à armature souple, pour mieux présenter l'entrée d'air et canaliser le flux après l'ouverture du conteneur. Le(s) arceau(x) est(sont) maintenu(s) plié(s) par les rabats de fermeture du conteneur et se déploie(nt) lors de l'ouverture manuelle ou automatique du conteneur de sorte à faciliter le gonflement et la mise en forme de la poche souple. Chaque arceau est constitué d'un matériau possédant des qualités de pliage et de dépliage à effet ressort, du type tire-fils nylon de 4 mm utilisé pour le passage des câbles dans des gaines.

Une fois les arceaux dépliés, ceux-ci constituent une structure qui repousse les rabats indépendants et ouvre le(s) trou(s) d'entrée d'air situé(s) sur la face en premier exposée au vent relatif.

Selon un perfectionnement du dispositif ne sortant pas du cadre de l'invention, il est possible de coupler l'ouverture du conteneur de manière automatique avec le délestage du sac de charge en accrochant le câble de libération des panneaux du conteneur par un moyen de liaison de type maillon métallique ou textile par exemple avec le système de libération du sac de charge, afin de déclencher le déploiement automatique du coussin gonflable sous la région de protection après l'ouverture du parachute principal.

Le couplage de la mise en oeuvre du dispositif d'amortissements de chocs avec le délestage du sac de charge est une disposition particulièrement destinée aux sauts des troupes aéroportées effectués à basse hauteur avec une ouverture automatique du parachute principal.

Selon la taille en longueur du conteneur, on peut imaginer disposer d'un nombre plus important de boucles de fermeture et d'oeillets associés que ceux précités dans les exemples.

Les moyens d'inter-verrouillage des panneaux de fermeture n'étant en aucune façon limitatifs de l'invention, ils sont simplement destinés à assurer le maintien en position verrouillée des panneaux une fois ceux-ci fermés.

Il est possible également dans les dispositifs de l'invention précités de rajouter un rabat supérieur indépendant sans que cela ne sorte du cadre de l'invention.

La poche souple est de préférence constituée d'un matériau tissu souple utilisé en aéronautique légère ou matériau analogue étanche à l'air ou sensiblement étanche, facilitant son expansion.

La poche souple peut disposer de plusieurs entrées d'air centrales ou latérales pour faciliter son gonflage pendant la descente, les entrées d'air étant disposées de manière à être accessibles au flux d'air après l'ouverture du conteneur. Le(s) trou(s) d'introduction d'air peu(ven)t être de différente(s) dimension(s) ainsi que le volume de la poche souple qui peut être double sans que cela ne change en rien au principe de l'invention.

Dans le cadre de l'utilisation de moyen d'ajustage et de serrage des drisses de maintien 24, des sangles d'attache 25 ou demi-ceinture d'attache 25', on peut employer tout type de boucles à dégrafage rapide, ou anneau à double coulissement, d'autres systèmes équivalents de réglage sont possibles tels que ceux du type, moyens auto-agrippants, molette de réglage, bouton de verrouillage, crans pour permettre un réglage rapide et efficace en fonction de la morphologie du porteur.

Le dispositif selon l'invention est adaptable à toutes palettes destinées au largage de colis, le fond du conteneur est alors arrimé au dos de la palette entre deux rails qui sont surélevés des roulements de la soute.

Liste des chiffres de référence :
1 conteneur
2 harnais
222 sangle principale du harnais
3 fond du conteneur
3' fond opposé
5 Panneau indépendant de fermeture latéral gauche
6 Panneau indépendant de fermeture latéral droit 9 ligne de pli inférieur
10 protège cuissarde
11 poche souple
12 sanglette à extrémité libre
13 passant cousu sur fond opposé
14 maillon d'accrochage rapide
15 bouton pression mâle
16 drisse de rappel droite
17 drisse de rappel gauche
18 bouton pression femelle
19 sangle de guidage
20 triple câble de libération
20A câble latéral de libération du mou du conteneur
20B autre câble latéral de libération du mou du conteneur
20C câble de libération des panneaux
20CC' double câble de libération des panneaux
21 câble de libération long
22 câble de libération court
23 pontet de haut de conteneur
24 drisse de maintien
24D drisse de maintien droite
24G drisse de maintien gauche
24D' drisse de maintien réglable droite
24G' drisse de maintien réglable gauche
25 sangle d'attache
25' demi ceinture d'attache
25A boucle autobloquante femelle
25B boucle autobloquante mâle
26 sangle dorsale lombaire
27 poignée de commande d'ouverture du conteneur
28 trou d'entrée d'air
29 mini-rabat de fermeture
30 boucle de fermeture du mini rabat
31 lest
32 passant de poche souple
33 anneau de passage
35 cordon élastique
36 gaine de protection
37 boucle de fermeture supérieure
38 boucle de fermeture inférieure
39D boucle de retenue femelle droite
39G boucle de retenue femelle gauche
39D' boucle de retenue mâle droite
39G' boucle de retenue mâle gauche
40 guide du câble de libération
41 panneau latéral gauche
42 panneau latéral droit
43 oeillet de fermeture
44 manchon de maintien
45 boucles de fermeture du bas
46 panneau d'appui sous-cutal
47 panneau
47A panneau de fermeture supérieur
47B panneau de fermeture inférieur
48 drisse d'arrimage
49 volet du trou d'entrée d'air
50 boucle de fermeture latérale
51 sangle de rattachement des sangles cuissardes
52 palette
53 colis largué
54 harnais à parachute
55 rail
BI branche inférieure de la sangle d'attache 25
BS branche supérieure de la sangle d'attache 25

## Revendications

1. - Conteneur (1) pour parachutisme, **caractérisé par le fait qu'**il comprend un fond (3), un coussin gonflable (11) fixé sur un côté du fond (3), ledit coussin gonflable (11) présentant au moins une entrée d'air (28) formée sur la face d'attaque destinée à être face à l'écoulement d'air à l'état déployé, des moyens de contention (5, 6) du coussin gonflable (11) dans une position repliée contre le fond (3) dans laquelle le conteneur (1) est sensiblement plat et l'au moins une entrée d'air (28) est obturée, et un système d'ouverture actionnable pour déclencher la libération des moyens de contention (5, 6) et le déploiement du coussin gonflable (11) par mouvement du conteneur (1) par rapport à un écoulement d'air créé par le saut en parachute dirigé dans l'au moins une entrée d'air (28), ledit conteneur (1) comprenant en outre des moyens de fixation à un ou plusieurs parmi un harnais (2) de parachutiste, un parachutiste ou un objet parachuté.

2. - Conteneur (1) selon la revendication 1, **caractérisé par le fait que** le coussin gonflable est constitué par une poche souple (11) étanche à l'air, l'au moins une entrée d'air (28) s'ouvrant sur une ou plusieurs chambres à l'intérieur de la poche souple (11) étanche à l'air, lesdites chambres étant facultativement mises en forme par un arceau maintenu plié par les moyens de contentions dans la position repliée du coussin gonflable.

3. - Conteneur (1) selon la revendication 2, **caractérisé par le fait qu'**un lest (31) est fixé sur le bord de l'au moins une entrée d'air (28) ou sur la face d'attaque du coussin gonflable.

4. - Conteneur (1) selon l'une des revendications 2 ou 3, **caractérisé par le fait qu'**il comprend une entrée d'air, un volet (49, 5, 6, 41, 42, 47) est disposé devant l'entrée d'air (28) pour l'obturer, ledit volet (49, 5, 6, 41, 42, 47) étant actionnable par l'utilisateur pour dégager l'entrée d'air (28) de la poche souple (11) afin de déployer le coussin gonflable.

5. - Conteneur (1) selon l'une des revendications 1 à 4, **caractérisé par le fait que** le conteneur (1) est fixé au harnais (2), le fond (3) étant cousu, collé ou soudé en moitié inférieure du harnais (2) et aux sangles de rattachement (51) des sangles cuissardes au harnais (2).

6. - Conteneur (1) selon l'une des revendications 1 à 4, **caractérisé par le fait que** le fond (3) est soit fixé intégralement en partie inférieure du harnais (2), soit qu'une partie du fond (3) est fixée en moitié inférieure du harnais (2), la partie restante du fond (3) du conteneur (1) étant fixée à chacune des cuisses de l'utilisateur par des drisses de maintien (24D, 24G ; 24D', 24G') se refermant autour de chacune des cuisses de l'utilisateur ou autour des sangles cuissardes.

7. - Conteneur (1) selon l'une des revendications 1 à 4, **caractérisé par le fait que** le fond (3) est fixé de manière amovible à une extrémité par des sangles d'attache (25) se refermant par un premier moyen de verrouillage (25A, 25B) autour de la sangle dorsale lombaire (26) du harnais (2) de l'utilisateur, autour des sangles principales (222) du harnais (2) ou dans des anneaux de liaison des sangles principales (222) du harnais (2) situés au niveau des hanches de l'utilisateur, et à l'autre extrémité aux sangles de rattachement (51) des sangles cuissardes au harnais (2) ou aux sangles cuissardes ou à chacune des cuisses de l'utilisateur par des drisses de maintien (24D, 24G ; 24D', 24G') se refermant autour des sangles cuissardes ou autour de chacune des cuisses de l'utilisateur.

8. - Conteneur (1) selon la revendication 7, **caractérisé par le fait qu'**une extrémité du fond (3) est fixée de manière amovible autour de la sangle dorsale lombaire (26), autour des sangles principales (222) ou dans des anneaux de liaison des sangles principales (222) et l'autre extrémité du fond (3) est fixée à chacune des cuisses de l'utilisateur par des drisses de maintien (24D, 24G ; 24D', 24G') se refermant autour de chacune des cuisses de l'utilisateur ou autour des sangles cuissardes, lesdites sangles d'attache (25) présentant un deuxième moyen de verrouillage déverrouillable par l'utilisateur, en retrait du premier moyen de verrouillage (25A, 25B), de telle sorte que, le premier moyen de verrouillage (25A, 25B) verrouillant chaque sangle d'attache (25) autour de la sangle dorsale lombaire (26) du harnais (2), autour des sangles principales (222) ou dans des anneaux de liaison des sangles principales (222), le deuxième moyen de verrouillage referme la sangle d'attache (25) sur elle-même, le déverrouillage du deuxième moyen de verrouillage permettant de faire passer ladite sangle d'attache (25) d'une première longueur à une deuxième longueur supérieure à la première longueur.

9. - Conteneur (1) selon l'une des revendications 1 à 4, **caractérisé par le fait que** le fond (3) est fixé à une extrémité par deux demi-ceintures d'attache (25') entourant la taille de l'utilisateur et à l'autre extrémité par des drisses de maintien (24D, 24G ; 24D', 24G') se refermant autour de chacune des cuisses de l'utilisateur ou autour des sangles cuissardes.

10. - Conteneur (1) selon l'une des revendications 1 à 9, **caractérisé par le fait que** le coussin gonflable est fixé de manière amovible ou permanente sur le fond (3').

11. - Conteneur (1) selon l'une des revendications 1 à 4, **caractérisé par le fait qu'**il est fixé à une palette (52) de colis largué (53) équipé d'un parachute de charge, le fond étant sensiblement rectangulaire et chacun de ses angles étant fixé de manière amovible à la face inférieure de la palette (52), des arceaux destinés à déployer le conteneur (1) étant disposés entre les rails (55) de la palette (52) et étant maintenus repliés par les moyens de contention, lesdits moyens de contention étant reliés au parachute de charge, de telle sorte que l'ouverture du parachute de charge libère les arceaux qui déploient le coussin gonflable.

12. - Conteneur (1) selon l'une des revendications 2 à 11, **caractérisé par le fait que** la poche souple (11), dans la position déployée du coussin gonflable, présente deux panneaux parallèles (41, 42) opposés, sensiblement perpendiculaires au plan du fond (3) et s'étendant depuis les bords latéraux du fond (3), les moyens de contention du coussin gonflable étant constitués par un moyen d'accrochage d'un desdits deux panneaux (41, 42) coopérant avec un moyen d'accrochage complémentaire porté par l'autre desdits deux panneaux pour les accrocher l'un à l'autre et ainsi comprimer le coussin gonflable et obturer son entrée d'air (28), ledit moyen d'accrochage coopérant en outre facultativement avec un moyen d'accrochage complémentaire (37, 38, 45) porté par le fond ou la poche souple (11).

13. - Conteneur (1) selon l'une des revendications 2 à 11, **caractérisé par le fait que** le bord de la face arrière, opposée à la face d'attaque, de la poche souple (11) qui est opposé au bord fixé au fond (3) du conteneur (1) porte un moyen d'accrochage coopérant avec un moyen d'accrochage complémentaire porté par le bord de la face d'attaque fixé au fond (3) du conteneur (1) pour constituer les moyens de contention du coussin gonflable, le comprimant et obturant son entrée d'air (28), les deux faces étant alors attachées suivant une ligne sensiblement parallèle aux bords avant et arrière du fond (3) du conteneur (1).

14. - Conteneur (1) selon l'une des revendications 1 à 11, **caractérisé par le fait que** le fond (3) porte deux panneaux latéraux indépendants (5, 6) de la poche souple (11), s'étendant suivant les bords latéraux du fond (3), les moyens de contention du coussin gonflable étant constitués par un moyen d'accrochage de l'un des panneaux (5, 6) coopérant avec un moyen d'accrochage complémentaire porté par l'autre des panneaux (5, 6) pour les accrocher l'un à l'autre et ainsi comprimer le coussin gonflable et obturer son entrée d'air (28), ledit moyen d'accrochage coopérant en outre facultativement avec un moyen d'accrochage complémentaire porté par le fond du conteneur (1), un rabat ou la poche souple (11).

15. - Conteneur (1) selon l'une des revendications 12 à 14, **caractérisé par le fait que** le moyen d'accrochage et le moyen d'accrochage complémentaire sont constitués par un système à boucles et oeillets, les boucles étant amenées à passer à travers les oeillets disposés en regard et étant ensuite traversées par un câble de libération (20C, 20CC', 21, 22), ledit câble de libération (20C, 20CC', 21, 22) étant relié à au système d'ouverture du conteneur (27).
